# EUROPEAN PATENT SPECIFICATION

(11) **EP 0 682 504 B1**
(45) Date of publication and mention of the grant of the patent: **03.05.2000**
(21) Application number: 94901154.8
(22) Date of filing: 30.09.1993
(51) Int. Cl.: A61G 7/057, A47C 27/08, A47C 21/04

(54) **INFLATABLE BODY SUPPORT**
AUFBLASBARE KÖRPERSTÜTZE
SUPPORT CORPOREL GONFLABLE

(30) Priority: 02.02.1993 US 12507
(43) Date of publication of application: 22.11.1995
(73) Proprietor: EHOB, INC., Indianapolis, IN 46240 (US)
(72) Inventor: SPAHN, James, G., Indianapolis, IN 46220 (US); LANGLEY, Steven, P., Martinsville, IN 46151 (US)
(74) Representative: Ganguillet, Cyril
(86) International application number: PCT/US93/09311
(87) International publication number: WO 94/17749

(56) References cited:
- US-A- 2 522 079
- US-A- 3 530 550
- US-A- 4 454 615
- US-A- 4 483 030
- US-A- 5 097 552
- US-A- 5 113 553

## Description

The present invention generally relates to the field of reclining devices for supporting the human body, and more particularly to an improved inflatable body support that provides pressure, heat and moisture dissipation to prevent the onset of pressure sores and ulcers.

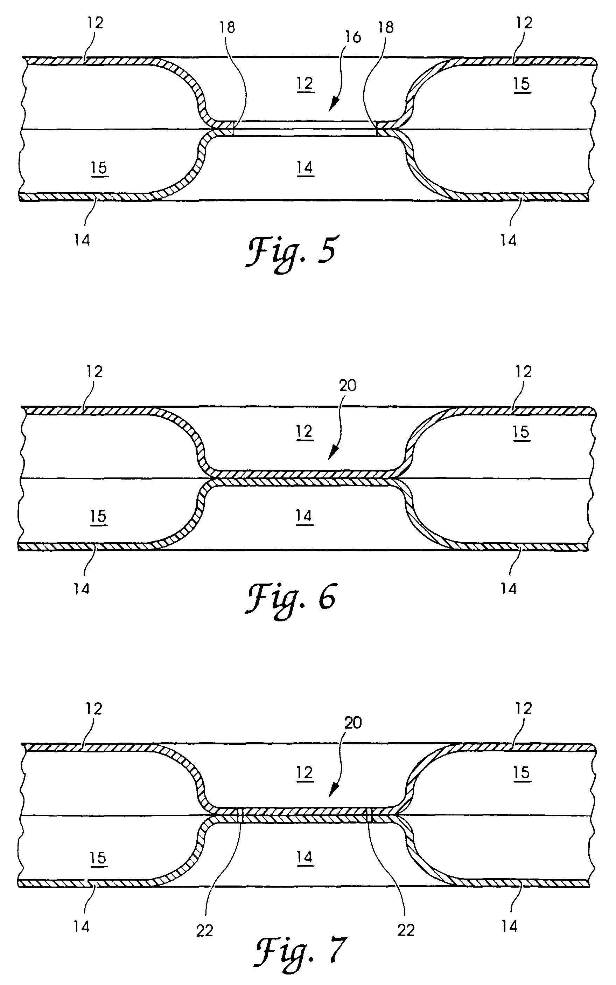

Pressure sores, and resulting ulcers, can begin long before a person is lying on a hospital bed. Pressure sores can result from the person being placed upon a hard hospital transportation cart, operating room table, CAT scanner, cardiac or day chair or wheelchair for an extended length of time. Inflatable pressure reducing and heat dissipating body supports, such as the one disclosed and illustrated in FIG. 6 of U.S. Patent No. 4,685,163 to Quillen et al. and in U.S. Patent No. 2,522,079, are now well known in the prior art as simple, cost effective means to provide effective skin care management. The inflatable body support in FIG. 6 of Quillen et al. is formed from a pair of plastic sheets joined together about their common periphery to form a single air pressurizable chamber therebetween. The pair of plastic sheets also have a plurality of aligned holes extending therethrough with the sheets being joined together around the circumference of each hole, preventing air flow from the air pressurizable chamber into the holes. The end result is a single chambered inflatable body cushion with a plurality of holes through and through.

The single air chamber design of the prior art inflatable body supports, such as the support of FIG. 6 of Quillen et al., are designed to provide equal support to the entire body, thereby reducing pressure on any one area to well below the capillary closure pressure to prevent pressure sores and ulcers from developing. Since heat build up can lead to tissue breakdown and harbor infection, air circulation is promoted by providing holes through and through the single air chamber over substantially its entire surface area. These holes also permit moisture to flow down and away from the person, which is particularly important for the incontinent person. Prior art inflatable body supports without holes through and through therefore do not provide adequate heat and moisture dissipation.

Skin friction and deep tissue shear is minimized in state of the prior art inflatable body supports through the use of non-abrasive materials of construction, which allows the person to easily move, eliminating friction or resistance. A non-porous, durable, hypo-allergenic vinyl with a flame retardant and an anti-microbial added has been a preferred material to date. The single air chamber, low profile design also deceases deep tissue shear because the support will contour to the person's body, thus cradling the body to provide support. For person safety, adjustable VELCRO brand hook and loop fasteners (VELCRO is a registered trademark) have been utilized to anchor the prior art supports to a mattress or other support surface.

Exemplary state of the prior art inflatable body supports of the Quillen et al. type described above are manufactured by EHOB, Inc., of Indianapolis, Indiana, and are identified by the WAFFLE trademark, which is Registered in the U.S. Patent and Trademark Office.

### SUMMARY OF THE INVENTION

The inflatable body support of the present invention includes novel improvements in combination with the state of the prior art inflatable body supports having holes through and through of the Quillen et al. type, described within the Background of the Invention section, above.

The improvements of the present invention include means for volume centering of the air within the inflatable body support of the Quillen et al. type under the torso, head and limbs, thereby maximizing the volume of air within the inflatable body support that is cushioning the torso, head and limbs. The volume centering improvements of the present invention allow an inflatable body support of the Quillen et al. type to be inflated to a desirably lower initial air pressure and still prevent the air cushion from collapsing under the weight of the torso, head and limbs. This end is accomplished in the preferred embodiment of the present invention by controlling the distension of the prior art inflatable body supports of the Quillen et al. type in those areas of the support that are not directly under the torso, head and limbs. As the through holes and surrounding materials of construction of the prior art inflatable body supports of the Quillen et al. type stretch, the volume of the air chamber in those areas increases, which permits a greater volume of air to flow to such areas from under the torso, head and limbs. Controlling the distension of the inflatable body support in those areas of the support that are not to be under the torso, head and limbs controls the increases in air chamber volume in such areas when a person lies atop the support. If the volume of the air chamber in such areas does not appreciably increase when a person lies atop the support, the air in the air chamber under the torso, head and limbs will not as readily flow to such other areas. There will be a smaller increase in the volume of the air chamber in such other areas to accommodate the additional air flow. In essence, the volume of air under the torso, head and limbs will remain centered there by controlling the distension of the inflatable body support in the areas that are not under the torso, head and limbs.

By allowing the through holes and the surrounding materials of construction to stretch under the torso, head and limbs while controlling the distension of the inflatable body support in all other areas there is also a maximization of the surface contact with the torso, head and limbs, resulting in a maximization of the supportive surface. Also, undesirable shear stresses between the inflatable body support and the person are supplanted by more desirable perpendicular stresses as the through holes and surrounding materials of construction stretch to conform to the contours of the torso, head and limbs.

The improvements of the present invention also include novel micro and macro adjustable anchoring straps that are separable and removably attachable to the inflatable body support of the present invention for securing the body support to mattresses, and the like, of varying dimensions. The straps of the present invention have a novel boomerang-like shape that enhance their gripping abilities, and they are constructed from the same type of materials of construction as is the inflatable body support.

One embodiment of the present invention is, in combination with an inflatable body support formed from a pair of plastic sheets joined together forming an air pressurizable chamber therebetween, the sheets having a plurality of aligned holes extending therethrough with the sheets being joined together around the circumference of each hole allowing body heat and moisture to flow through each hole but preventing air flow from the chamber into each hole, thereby providing an air cushion for supporting a person positioned thereatop that dissipates pressure, heat and moisture to prevent the onset of pressure sores and ulcers, the improvement which comprises: occlusion means joined with the sheets about the circumference of a plurality of the holes over which the torso, head and limbs of a person positioned atop the inflatable body support would not lie, occluding such holes and reducing the distension of the inflatable body support surrounding the occluded holes thereby volume centering the air within the air pressurizable chamber under a person positioned atop the inflatable body support.

Another embodiment of the present invention is, in combination with an inflatable body support formed from a pair of plastic sheets joined together forming an air pressurizable chamber therebetween, the sheets having a plurality of aligned holes extending therethrough with the sheets being joined together around the circumference of each hole allowing body heat and moisture to flow through each hole but preventing air flow from the chamber into each hole, thereby providing an air cushion for supporting a person positioned thereatop that dissipates pressure, heat and moisture to prevent the onset of pressure sores and ulcers, the improvement which comprises: a plurality of strap tabs attached to the perimeter of the inflatable body support, each tab having at least one tab hole and a number of the tabs having a plurality of spaced apart tab holes; a pair of separable, generally U-shaped anchoring straps, each strap having two generally boomerang-shaped halves disposed in mirror image relationship and at least one strap hole at each free end thereof; and connector means to removably attach the anchoring straps to the strap tabs when selected strap holes in the anchoring straps are aligned with selected tab holes in the strap tabs.

Another embodiment of the present invention is, in combination with an inflatable body support formed from a pair of plastic sheets joined together forming an air pressurizable chamber therebetween, the sheets having a plurality of aligned holes extending therethrough with the sheets being joined together around the circumference of each hole allowing body heat and moisture to flow through each hole but preventing air flow from the chamber into each hole, thereby providing an air cushion for supporting a person positioned thereatop that dissipates pressure, heat and moisture to prevent the onset of pressure sores and ulcers, the improvement which comprises: occlusion means joined with the sheets about the circumference of a plurality of the holes over which the torso, head and limbs of a person positioned atop the inflatable body support would not lie, occluding such holes and reducing the distension of the inflatable body support surrounding the occluded holes thereby volume centering the air within the air pressurizable chamber under a person positioned atop the inflatable body support; a plurality of strap tabs attached to the perimeter of the inflatable body support, each tab having at least one tab hole and a number of the tabs having a plurality of spaced apart tab holes; a pair of separable, generally U-shaped anchoring straps, each strap having two generally boomerang-shaped halves disposed in mirror image relationship and at least one strap hole at each free end thereof; and connector means to removably attach the anchoring straps to the strap tabs when selected strap holes in the anchoring straps are aligned with selected tab holes in the strap tabs.

Another embodiment of the present invention is a connector, comprising: a button supported upon a base member; a closure member connected to the base member and having a pair of pinch tabs; and a through hole disposed between the pinch tabs, the through hole being sized to snappingly receive the button in locking relationship when the pinch tabs are in substantially planar relationship with the through hole, and elliptically distorting when the pinch tabs are pinched between a thumb and first finger into a non-planar relationship with the through hole means thereby freeing the closure member from its locking engagement with the button.

It is an object of the present invention to provide an improved inflatable body support of the Quillen et al. type that volume centers air within the body support under a person's torso, head and limbs to permit the body support to be inflated to lower and more desirable internal air pressures.

It is an object of the present invention to provide an improved inflatable body support that has micro and macro adjustable anchoring straps with improved gripping characteristics.

It is a further object of the present invention to provide a novel connector with a two-finger pinch-to-open releasing action.

Related objects and advantages of the present invention will be apparent from the following descriptions.

### BRIEF DESCRIPTION OF THE DRAWINGS

Fig. 1 is a partially exploded, perspective view of a preferred embodiment of the inflatable body support of the present invention.
Fig. 2 is a left end view of the inflatable body support of Fig. 1.
Fig. 3 is a left end view of the inflatable body support of Fig. 1, with an alternative strap embodiment of the present invention.
Fig. 4 is a top plan view of the preferred strap of the present invention.
Fig. 5 is an enlarged cross-sectional view of the inflatable body support of Fig. 1 taken along line 5-5 in the direction of the arrows.
Fig. 6 is an enlarged cross-sectional view of the inflatable body support of Fig. 1 taken along line 6-6 in the direction of the arrows.
Fig. 7 is an enlarged cross-sectional view of the inflatable body support of Fig. 1 taken along line 6-6 in the direction of the arrows.
Fig. 8 is a perspective view of the preferred connector means for the inflatable body support.
FIG. 9 is top plan view of the connector means of FIG. 7.
FIG. 10 is a right side elevation view of the connector means of FIG. 8.
FIG. 11 is a bottom plan view of the connector means of FIG. 8.
FIG. 12 is a perspective view of the connector means of FIG. 8 in the pinch-to-open configuration, with an operator's hand shown in dotted outline.

### DESCRIPTION OF THE PREFERRED EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated devices, and such further applications of the principles of the invention as illustrated therein being contemplated as would normally occur to one skilled in the art to which the invention relates.

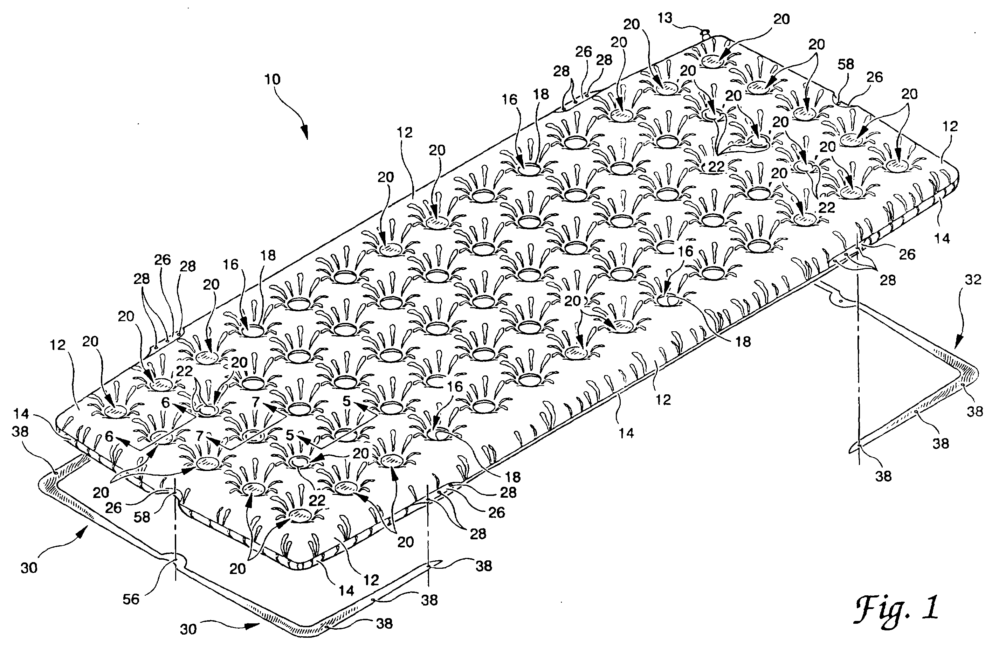

Referring now to the drawings, Fig. 1 illustrates the preferred embodiments of the improvements of the present invention in combination with a state of the prior art inflatable body support of the Quillen et al. type. The improved inflatable body support 10 of the present invention includes a pair of plastic sheets 12 and 14 that are joined together by conventional means to form an air pressurizable chamber 15 therebetween (see Figs. 5-7) that can be pressurized via a conventional air valve 13. The sheets 12 and 14 have a plurality of aligned through holes 16 extending therethrough, allowing body heat and moisture to flow through the sheets, with the sheets 12 and 14 being joined together around the circumference 18 of each hole 16 (see Fig. 5) by conventional bar welding techniques to prevent air flow into the holes 16 from the pressurizable air chamber 15 formed by the sheets 12 and 14.

In the state of the prior art inflatable body supports of the Quillen et al. type, aligned through holes 16 are provided over substantially the entire surface area of the joined sheets that form the air pressurizable chamber 15, for the principal reason that joining the sheets together around the circumference 18 of each hole 16 helps to maintain the integrity of the joined sheets as an air pressurizable chamber 15 that will support a person thereatop. In a preferred prior art construction technique, the through holes 16 are formed by first joining the pair of sheets 12 and 14 together by conventional bar welding techniques about what will become the circumference 18 of each through hole 16. Through holes 16 are then formed by cutting away the pair of plastic sheets 12 and 14 that lie within the circumferential joinder 18 of the sheets surrounding the through holes 16.

In the preferred embodiment of the body support 10 of the present invention, through holes 16 are constructed in this fashion (see Fig. 5), but only in those areas of body support 10 that will lie under the torso, head and limbs of a person lying thereatop. In the remaining areas of body support 10 where the sheets 12 and 14 have been circumferentially joined as in the prior art construction technique, the pair of plastic sheets 20 that lie within the circumferential joinders 18 of the sheets 12 and 14 are not cut away, but are left in place (see Fig. 6) to leave occluded what would otherwise have become through holes 16 by the prior art construction technique.

Testing of the preferred embodiment of the inflatable body support 10 of the present invention to date has established that when a person lies atop body support 10, the circumferential joinders 18 and the sheets 12 and 14 surrounding the pair of plastic sheets 20 left in places that would otherwise have become through holes 16 do not stretch as much as do the circumferential joinders 18 and the sheets 12 and 14 that surround through holes 16. Consequently, inflatable body support 10 does not distend as much in the areas surrounding the pair of plastic sheets 20 as it does in the areas where through holes 16 have been formed. If the volume of air chamber 15 in those areas of the inflatable body support 10 that are not to be under the torso, head and limbs does not appreciably increase by distension when a person lies thereatop, the volume of air in air chamber 15 under the torso, head and limbs will not be readily displaced from under the torso, head and limbs. There will not be a sufficient increase in volume in other areas of air chamber 15 to accommodate a significant additional volume of air from under the torso, head and limbs. In essence, controlling the distension of the inflatable body support 10 in areas that are not to be under the torso, head and limbs volume centers the air within air chamber 15 in areas that will be under the torso, head and limbs.

Extensive CT scanning and magnetic resonance imaging in testing completed to date has confirmed that the preferred embodiment of the present invention does volume center the air within air chamber 15 under the torso, head and limbs of a person lying atop inflatable body support 10, in the manner described, thereby maximizing the volume of air within air chamber 15 that is cushioning the torso, head and limbs.

Referring now to Figs. 1 and 7, a plurality of the pair of plastic sheets 20 left occluding what would otherwise have become through holes 16 have been further provided with at least one through slit 22, the presence of which permits some additional stretching of the pair of plastic sheets 20 and some corresponding additional distension of the surrounding inflatable body support 10. Selective placement of slits 22 in pairs of plastic sheets 20 allows for limited control over the degree of distension of those portions of inflatable body support 10 that may only partially cushion the head and limb areas, where some moderate distension of inflatable body support 10 may be desirable for adequate cushioning.

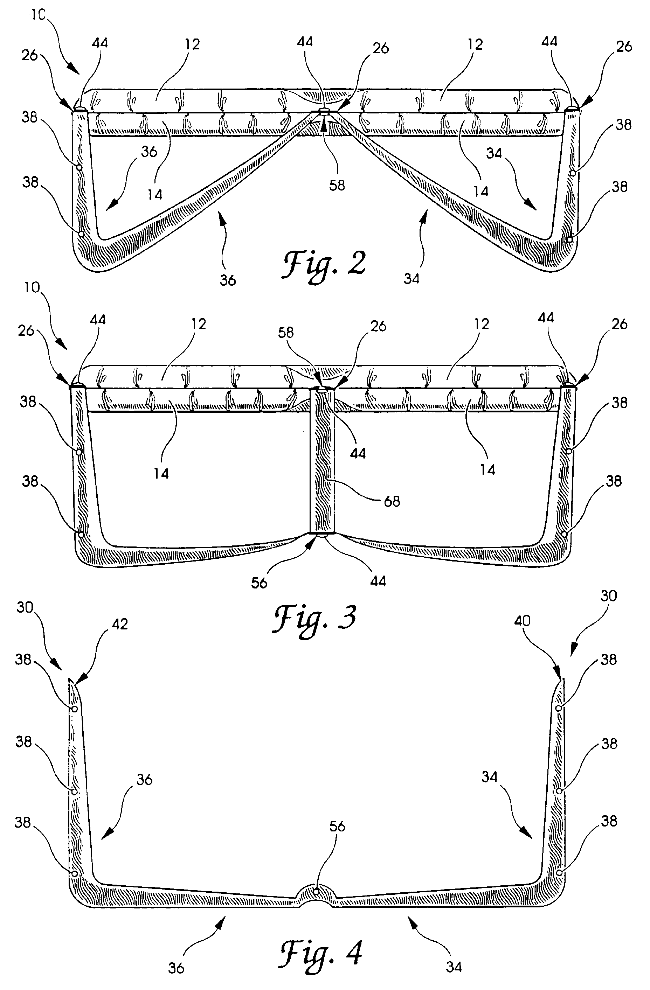

Referring now to Figs. 1-4, the improved inflatable body support 10 of the present invention further includes novel macro and micro adjustable anchoring straps 30 and 32 that are separable and removably attachable to the inflated body support 10 of the preferred embodiment for securing the inflatable body support 10 to mattresses, and the like, of varying dimensions. To accommodate the anchoring straps 30 and 32, a plurality of strap tabs 26 are attached to the perimeter of the inflatable body support 10, with each tab having at least one tab hole 28, and a number of the tabs 26 having a plurality of spaced apart tab holes 28. The anchoring straps 30 and 32 of the preferred embodiment are each generally U-shaped and are substantially identical in shape and construction. In the preferred embodiment, anchoring straps 30 and 32 are constructed from the same materials of construction as are sheets 12 and 14 of the inflatable body support 10. A plan view of anchoring strap 30 is illustrated in Fig. 4.

Referring to Fig. 4, and anchoring strap 30, each anchoring strap has two generally boomerang-shaped halves 34 and 36, the shapes of which were found to improve the gripping characteristics of the anchoring straps, that are disposed in mirror image relationship, with a plurality of strap holes 38 provided at each free end 40 and 42 thereof. In the preferred embodiment illustrated in Figs. 1-4, the plurality of strap holes 38 at the free ends 40 and 42 of anchoring strap 30 are spaced farther apart from each other than are the spaced apart tab holes 28 on the strap tabs 26 that have a plurality of tab holes 28, which allow macro and micro adjustments of the connections between the strap tabs 26 and the anchoring straps 30 and 32, as will be evident from the discussion below.

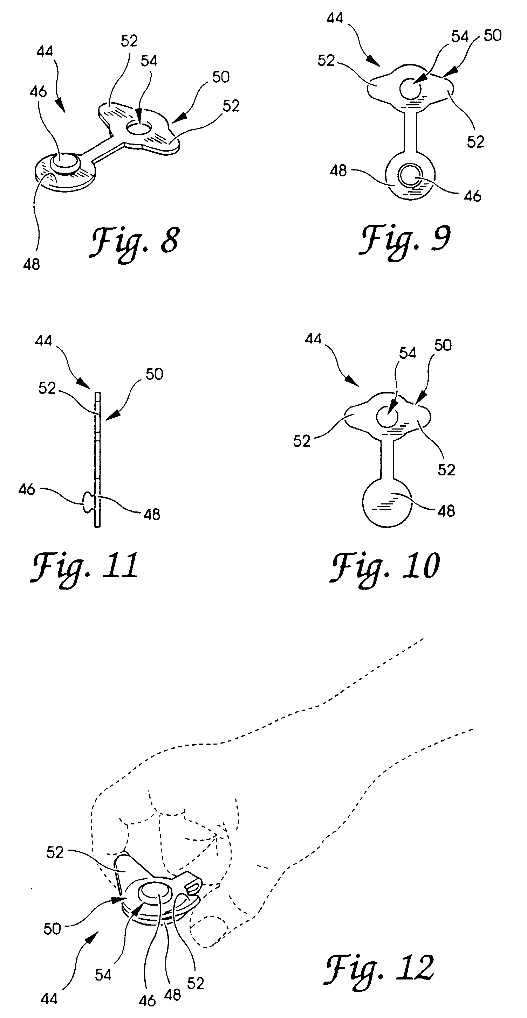

Referring now to Figs. 8-11, a connector 44 is provided to removably attach the anchoring straps 30 and 32 to the strap tabs 26 when selected strap holes 38 in anchoring straps 30 and 32 are aligned with selected tab holes 28 in the strap tabs 26. Connector 44 has a button 46 that is sized to be snugly received through strap holes 38 in anchoring straps 30 and 32, and through tab holes 28 in strap tabs 26. Button 46 is supported upon a base member 48, which is connected to a closure member 50 having a pair of pinch tabs 52 and a through hole 54 therebetween. Through hole 54 is sized to snugly receive button 46. Connector 44 is constructed from a relatively pliable plastic material such that the through hole 54 may be sized to cause closure member 50 to snap onto button 46 when pinch tabs 52 are substantially planar with through hole 54, and such that through hole 54 elliptically distorts when pinch tabs 52 are pinched between a thumb and first finger, for example (see FIG. 12), thereby allowing closure member 50 to be freed from its engagement with button 46. Connector 44 is the preferred connector for all removable connections of straps 30 and 32 and tabs 26 of the preferred embodiment, for it resists unsnapping under shear stresses, yet is easily released by pinching tabs 52 with two fingers of one hand.

Referring again to Figs. 1-4, and anchoring strap 30, corresponding strap holes 38 at the free ends 40 and 42 of anchoring strap 30 are aligned with corresponding tab holes 28 of two of the strap tabs 26 that have a plurality of spaced apart tab holes 28 (see Fig. 1). Micro adjustments of the overall length of anchoring strap 30 may be made by aligning the corresponding strap holes 38 at the free ends 40 and 42 of anchoring strap 30 with another pair of tab holes 28 selected from among the plurality of the spaced apart tab holes 28 on the strap tabs 26 that have been provided with a plurality of spaced apart tab holes 28. Macro adjustments of the overall length of anchoring strap 30 may be made by aligning yet another pair of corresponding strap holes 38 at the free ends 40 and 42 of anchoring strap 30 with tab holes 28 selected from among the plurality of the spaced apart tab holes 28 on the strap tabs 26 that have been provided with a plurality of spaced apart tab holes 28.

Continuing to refer to Figs. 1-4, and anchoring strap 30, at least one strap hole 56 is provided in each of the anchoring straps 30 and 32 between the two generally boomerang-shaped halves 34 and 36 thereof. Referring now to Fig. 2, in one preferred embodiment, strap hole 56 is aligned with and removably attached with the connector 44 to a tab hole 58 (Fig. 1) that is disposed between the strap tabs 26 to which the free ends of the anchoring straps 30 and 32 have been attached. In this configuration (Fig. 2) the two generally boomerang-shaped halves 34 and 36 of the anchoring strap 30 would be fit around the corners of a mattress, or the like. Referring now to Fig. 3, and anchoring strap 30, alternatively, an extender anchoring strap 68 having a strap hole 38 at each end thereof may have one of its strap holes 38 aligned with and removably attached with a connector 44 to strap hole 56 of anchoring strap 30, and may have its other strap hole aligned with and removably attached with a connector 44 to tab hole 58. In this configuration (Fig. 3) the two generally boomerang-shaped halves of the anchoring strap would be fit around the corners of a deeper mattress, or the like. In a third embodiment, not shown, strap hole 56 of anchoring straps 30 and 32 may be left unattached, and the anchoring straps 30 and 32 could be placed under a mattress, or the like, to anchor the inflatable body support 10 in place.

While the invention has been illustrated and described in detail in the drawings and foregoing description, the same is to be considered as illustrative and not restrictive in character, it being understood that only the preferred embodiments have been shown and described and that all changes and modifications that come within the scope of the invention are desired to be protected. Materials of construction and techniques of construction of the preferred embodiment, as well as the general design of the preferred embodiment, other than the improvements that are the present invention, are the same as those of the Quillen et al. type inflatable body supports described in the Background of the Invention.

## Claims

1. An inflatable body support (10) formed from a pair of plastic sheets (12, 14) joined together forming an air pressurizable chamber (15) therebetween, the sheets having a plurality of aligned holes (16) extending therethrough with the sheets being joined together round the circumference (18) of each hole allowing body heat and moisture to flow through each hole but preventing air flow from the chamber into each hole, thereby providing an air cushion for supporting a person positioned there atop that dissipates pressure, heat and moisture to prevent the onset of pressure sores and ulcers, characterised in that it comprises:
occlusion means (20) occluding a plurality of said holes over which the torso, head and limbs of a person positioned atop the inflatable body support would not lie, thereby reducing any distension of the inflatable body support surrounding the holes that have been occluded and thereby volume centering the air within the air pressurizable chamber under the torso, head and limbs of a person positioned atop the inflatable body support.

2. The inflatable body support (10) of claim 1 wherein said occlusion means (20) include at least one plastic sheet joined with the pair of plastic sheets (12, 14) being joined together round the circumference of each hole to be occluded.

3. The inflatable body support (10) of claim 2 wherein said occlusion means (20) include the pair of plastic sheets (12, 14) being joined together round the circumference of each hole that has been occluded.

4. The inflatable body support (10) of claim 2 wherein said occlusion means (20) further include at least one slit (22) therethrough in a plurality of the holes occluded that border non-occluded holes (16).

5. The inflatable body support (10) of claim 4 wherein said occlusion means (20) include a pair of crescent-shaped slits in mirror-image relationship cut therethrough.

6. The inflatable body support (10) of one of the claims 1 to 5 and further comprising:
a plurality of strap tabs (26) attached to the perimeter of said inflatable body support, each tab having at least one tab hole (28) and a number of said tabs (26) having a plurality of spaced apart tab holes (28);
a pair of separable, generally U-shaped anchoring straps when not in use (30, 32), each strap having two generally boomerang-shaped halves when not in use (34, 36) disposed in mirror image relationship and at least one strap hole (38) at each free end thereof (40, 42); and
connector means (44) to removably attach said anchoring straps to said strap tabs when selected strap holes in said anchoring straps are aligned with selected tab holes in said strap tabs.

7. The inflatable body support (10) of claim 6 wherein said anchoring straps (30, 32) have a plurality of spaced apart strap holes (38) at the free ends (40, 42) thereof.

8. The inflatable body support (10) of claim 6 wherein the plurality of strap holes (38) at the free ends (40, 42) of said anchoring straps (30, 32) are spaced farther apart from each other than are the spaced apart tab holes (28) on said strap tabs (26) having a plurality of tab holes.

9. The inflatable body support (10) of claim 6 and further comprising at least one strap hole (38) in each of said generally U-shaped anchoring straps (30, 32) between the two generally boomerang-shaped halves (34, 36) thereof that is aligned with and removably attach with said connector means (44) to a tab hole (28) in a strap tab (26) that is between the strap tabs to which the free ends (40, 42) of said anchoring straps have been attached.

10. The inflatable body support (10) of claim 9 and further comprising a pair of separable, extender anchoring straps (68), each having a strap hole (38) at each end thereof, one of which is aligned with and removably attached with said connector means (44) to a strap hole (56) in one of said generally U-shaped anchoring straps (30, 32) between the two generally boomerang-shaped halves thereof (34, 36), and the other of which is aligned with and removably attached with said connector means to a tab hole (58) in a strap tab (26) that is between the strap tabs (26) to which the free ends (40, 42) of said anchoring straps (30, 32) have been attached.

11. The inflatable body support (10) of claim 6 wherein said connector means (44) includes
a button (46) supported upon a base member (48);
a closure member (50) connected to the base member and having a pair of pinch tabs (52); and
a through hole means (54) disposed between said pinch tabs, said through hole means being sized to snappingly receive said button in locking relationship when said pinch tabs are in substantially planar relationship with said through hole means, and elliptically distorting when said pinch tabs are pinched between a thumb and first finger into a non-planar relationship with said through hole means thereby freeing said closure member from its locking engagement with the button.

## Patentansprüche

1. Aus einem Paar zusammenverbundenen, eine Luftdruckkammer (15) bildenden Kunststofffolien (12, 14) gebildete aufblasbare Körperstütze (10), wobei die Folien eine Vielzahl durchquerender, in Reihen angeordneter Löcher (16) aufweisen, wobei die Folien um den Umkreis (18) jedes Loches herum miteinander verbunden sind, Körperwärme und -feuchtigkeit durch jedes Loch fliessen lassen jedoch einen Luftstrom aus der Kammer in jedes Loch verhindern, somit ein Luftkissen zum Tragen einer darauf gelegten Person bilden, welches Druck, Wärme und Feuchtigkeit abführt um die Bildung von Druckwunden und Geschwüren zu verhindern, dadurch gegenzeichnet, dass sie folgendes aufweist:
Verschlussmittel (20), welche eine Vielzahl der genannten Löcher verschliessen, oberhalb welcher der Rumpf, der Kopf und die Glieder einer auf die aufblasbare Körperstütze gelegten Person nicht zu liegen kommen würden, somit jegliche Verziehung der aufblasbaren Körperstütze um die verschlossenen Löcher vermindert und das Luftvolumen innerhalb der Luftdruckkammer unterhalb des Rumpfes, des Kopfes und der Glieder einer auf die aufblasbare Körperstütze gelegten Person zentriert.

2. Aufblasbare Körperstütze (10) gemäss Anspruch 1, wobei die genannten Verschlussmittel (20) wenigstens eine Kunststofffolie aufweisen, die mit dem Paar Kunststofffolien (12, 14), welche um den Umkreis jedes zu verschliessenden Loches verbunden sind, verbunden ist.

3. Aufblasbare Körperstütze (10) gemäss Anspruch 2, wobei die genannten Verschlussmittel (20) das Paar Kunststoffolien (12, 14), welche um den Umkreis jedes verschlossenen Loches verbunden sind, aufweisen.

4. Aufblasbare Körperstütze (10) gemäss Anspruch 2, wobei die genannten Verschlussmittel (20) ebenfalls wenigstens einen durchquerenden Schlitz (22) in einer Vielzahl der verschlossenen Löcher, welche die nicht verschlossenen Löcher (16) angrenzen, aufweisen.

5. Aufblasbare Körperstütze (10) gemäss Anspruch 4, wobei die genannten Verschlussmittel (20) ein Paar durchquerend ausgeschnittener, sichelförmiger, spiegelsymetrisch angeordneter Schlitze aufweist.

6. Aufblasbare Körperstütze (10) gemäss einem der Ansprüche 1 bis 5, des weiteren aufweisend:
- eine Vielzahl Befestigungslapen (26), die am Umfang der genannten aufblasbaren Körperstütze befestigt sind, wobei jeder Lapen wenigstens ein Lapenloch (28) aufweist und eine Anzahl der genannten Lapen (26) eine Vielzahl in Abstand angeordneter Lapenlöcher (28) aufweist;
- ein Paar trennbarer Befestigungsgurte, welche allgemein eine U-Form aufweisen, wenn sie nicht im Gebrauch sind (30, 32), wobei jeder Gurt zwei spiegelbildlich angeordnete Hälften (34, 36), welche die allgemeine Form eines Boomerangs aufweisen, wenn sie nicht in Gebrauch sind, aufweist, mit wenigstens einem Gurtloch (38) an jedem deren freien Enden (40, 42); und
- Verbindungsmittel (44) um die genannten Befestigungsgurte mit den genannten Befestigungslapen in trennbarer Weise zu verbinden, wenn ausgewählte Gurtlöcher in den genannten Befestigungsgurten ausgewählten Lapenlöcher in den genannten Befestigungslapen gegenüberliegen.

7. Aufblasbare Körperstütze (10) gemäss Anspruch 6, wobei die genannten Befestigungsgurte (30, 32) eine Vielzahl, in Abstand angeordneter Gurtlöcher (38) an ihren freien Enden (40, 42) aufweisen.

8. Aufblasbare Körperstütze (10) gemäss Anspruch 6, wobei die Vielzahl Gurtlöcher (38) an den freien Enden (40, 42) der genannten Befestigungsgurte (30, 32) in grösseren Abständen angeordnet sind als die in Abstand angeordneten Lapenlöcher (28) auf den genannten Befestigungslapen (26) mit einer Vielzahl Lapenlöcher.

9. Aufblasbare Körperstütze (10) gemäss Anspruch 6, mit des weiteren wenigstens einem Gurtloch (38) in jedem der genannten allgemein U-förmigen Befestigungsgurte (30, 32), zwischen den zwei allgemein Boomerang-förmigen Hälften (34, 36), welches einem Lapenloch (28) in einem Verbindungslapen (26), welcher sich zwischen den Verbindungslapen, mit denen die freien Enden (40, 42) der genannten Befestigungsgurte befestigt wurden, befindet, gegenüberliegt, und Mittels dem genannten Verbindungsmittel (44)mit diesem verbunden ist.

10. Aufblasbare Körperstütze (10) gemäss Anspruch 9, mit des weiteren einem Paar abtrennbarer Verlängerungsbefestigungsgurte (68), welche an jedem ihrer Enden ein Gurtloch (38) aufweisen, wovon eines gegenüber einem Gurtloch (56) in einem der genannten allgemein U-förmigen Befestigungsgurte (30, 32), zwischen den zwei allgemein Boomerang-förmigen Hälften (34, 36) liegt und mit diesem Mittels dem genannten Verbindungsmittel (44) befestigt ist, und wovon das andere gegenüber einem Lapenloch (58) in einem Befestigungslapen (26), welches zwischen den Befestigungslapen (26) an welchen die freien Enden (40, 42) der genannten Befestigungsgurte (30, 32) befestigt wurden, liegt, und lösbar mittels dem genannten Befestigungsmittel an diesem befestigt ist.

11. Aufblasbare Körperstütze (10) gemäss Anspruch 6, wobei das genannte Verbindungsmittel (41)
- einen, durch einen Untersatz (48) getragenen Knopf,
- ein, mit dem Untersatz verbundenes und ein Paar Klemmlapen aufweisendes Verschlussteil (50), und
- ein durchquerendes Lochmittel (54) zwischen den genannten Klemmlapen aufweist, wobei das genannte durchquerende Lochmittel so bemessen ist, dass es schnappend den genannten Knopf in Sperrstellung aufnimmt, wenn die genannten Klemmlapen in wesentlich flacher Weise mit dem genannten durchquerenden Lochmittel verbunden sind, und sich ellipsenartig verformt, wenn die genannten Klemmlapen zwischen einem Daumen und einem Zeigefinger in nicht flacher Verbindung mit dem genannten durchquerenden Lochmittel eingeklemmt sind, und somit das genannte Verschlussteil von seiner Verschlussverbindung mit dem Knopf lösen.

## Revendications

1. Un support corporel gonflable (10) formé d'une paire de feuilles en plastique (12, 14) jointes ensemble, formant entre-elles une chambre (15) pressurisable par air, les feuilles présentant une pluralité de trous (16) alignés les traversant, les feuilles étant jointes ensemble le long de la circonférence (18) de chaque trou, permettant à la chaleur et à l'humidité corporelle de s'écouler à travers chaque trou mais empêchant l'air de s'écouler de la chambre dans chaque trou, constituant de la sorte un coussin d'air pour supporter une personne placée dessus, qui dissipe pression, chaleur et humidité, pour éviter la formation de plaies et d'ulcères dus à la pression, caractérisé en ce qu'il comporte :
des moyens de fermeture (20) fermant une pluralité des dits trous, au-dessus desquels le torse, la tête et les membres d'une personne placée sur le support corporel gonflable ne se trouverait pas, réduisant ainsi toute distension du support corporel gonflable entourant les trous qui ont été fermés, et centrant ainsi le volume d'air à l'intérieur de la chambre pressurisable sous le torse, la tête et les membres d'une personne placée sur le support corporel gonflable.

2. Support corporel gonflable (10) selon la revendication 1, dans lequel les dits moyens de fermeture (20) comprennent au moins une feuille de plastique jointe à la paire de feuilles en plastique (12, 14) qui sont jointes ensemble le long de la circonférence de chacun des trous devant être fermé.

3. Support corporel gonflable (10) selon la revendication 2, dans lequel les dits moyens de fermeture (20) comprennent la paire de feuilles en plastique (12, 14) jointes ensemble le long de la circonférence de chaque trou qui a été fermé.

4. Support corporel gonflable selon la revendication 2, dans lequel les dits moyens de fermeture (20) comprennent de plus au moins une fente traversante (22) dans une pluralité de trous fermés, voisins de trous non-fermés (16).

5. Support corporel gonflable selon la revendication 4, dans lequel les dits moyens de fermeture (20) comprennent une paire de fentes en forme de croissant, découpées dedans, et disposées selon une symétrie miroir.

6. Support corporel gonflable (10) selon l'une des revendications 1 à 5 comprenant de plus :
- une pluralité de pattes d'attache (26), attachées au périmètre du dit support corporel gonflable, chaque patte présentant au moins un trou de patte (28), et plusieurs des dites pattes (26) ayant une pluralité de trous de pattes (28) espacés les uns des autres;
- une paire de sangles d'attache, présentant la forme générale d'un U lorsqu'elles ne sont pas utilisées (30, 32), chaque sangle présentant deux moitiés ayant la forme générale de boomerangs quand elles ne sont pas utilisées (34, 36), disposés selon une symétrie miroir, avec au moins un trou de sangle (38) à chacune de leurs extrémités libres (40, 42); et
- des moyens de connexion (44) pour fixer de façon réversible les dites sangles d'attache aux dites pattes d'attache lorsque des trous d'attache choisis dans les dites sangles d'attache sont alignés avec des trous de patte choisis dans les dites pattes d'attache.

7. Support corporel gonflable (10) selon la revendication 6 dans lequel les dites sangles d'attache (30, 32) présentent une pluralité de trous d'attache (38), espacés les uns des autres, à leurs extrémités libres (40, 42).

8. Support corporel gonflable (10) selon la revendication 6, dans lequel la pluralité de trous d'attache (38) aux extrémités libres (40, 42) des dites sangles d'attache (30, 32) sont espacés davantage les uns des autres que ne le sont les trous de patte 28 espacés sur les dites pattes d'attache (26) présentant une pluralité de trous de patte.

9. Support corporel gonflable (10) selon la revendication 6, comprenant de plus au moins un trou d'attache (38) en chacune des dites sangles d'attache (30, 32) présentant la forme générale d'un U, entre les deux moitiés (34, 36) présentant la forme générale d'un boomerang, qui est aligné avec et fixé de façon réversible par les dits moyens de connexion (44) à un trou de patte (28) dans une patte d'attache (26), située entre les pattes d'attache auxquelles les extrémités libres (40, 42) des dites sangles d'attaches ont été attachées.

10. Support corporel gonflable (10) selon la revendication 9, comprenant de plus une paire de rallonges de sangle d'attache (68) présentant chacune un trou de sangle (38) à chacune de leurs extrémités, dont l'un est aligné avec et fixé de façon réversible par les dits moyens de connexion (44) à un trou de sangle (56) de l'une des dites sangles d'attache (30, 32) de forme générale en U, entre ses moitiés (34, 36) ayant la forme générale d'un boomerang, et dont l'autre est aligné avec et attaché de façon réversible par les dits moyens de connexion à un trou de patte (58) d'une patte d'attache (26) située entre les pattes d'attache (26) auxquelles les extrémités libres (40, 42) des dites sangles d'attache (30, 32) ont été attachées.

11. Support corporel gonflable (10) selon la revendication 6, dans lequel les moyens de connexion (44) comprennent :
- un bouton 46 supporté par une pièce de base (48);
- une pièce de fermeture (50) reliée à la pièce de base et présentant une paire de pattes de pincement (52);
- et un moyen formant un trou traversant (54), agencé entre les dites pattes de pincement, le dit moyen formant le trou traversant étant dimensionné de manière à recevoir le dit bouton comme un bouton pression en position de fermeture, lorsque les dites pinces de pincement sont à plat avec le dit moyen formant le trou traversant et de manière à se distordre en forme l'ellipse lorsque les dites pattes de pincement sont pincées entre un pouce et un index en n'étant pas à plat avec le dit moyen formant le trou traversant, libérant de la sorte la pièce de fermeture de son verrouillage avec le bouton.
